# DEMANDE DE BREVET EUROPEEN

(11) **EP 3 915 830 A1**
(43) Date de publication de la demande: **01.12.2021**
(21) Numéro de dépôt: 21171737.6
(22) Date de dépôt: 03.05.2021
(51) Int. Cl.: B60P 1/64, B60P 1/43, B65F 3/00, B65F 1/00

(54) **ENSEMBLE MOBILE POUR RÉALISER LA COLLECTE DE DÉCHETS**

(30) Priorité: 29.05.2020 FR 2005695
(71) Demandeur: Sepra Environnement, 42640 LA BENISSON DIEU (FR)
(72) Inventeur: DE SEROUX, Aymar, 42640 SAINT ROMAIN LA MOTTE (FR)
(74) Mandataire: Cabinet Laurent & Charras

(57) **Abrégé**

Cet ensemble mobile (1) pour réaliser la collecte de déchets, comprend un véhicule tracteur (2) et une remorque (3) attelée sur ce dernier, ladite remorque (3) étant pourvue de rampes (10) au niveau de ses deux extrémités avant et arrière, et susceptible de recevoir sur sa plate-forme (5) au moins un containeur ou benne amovible (7) de réception desdits déchets.

Le véhicule tracteur (2) est lui-même pourvu d'une plate-forme (4) susceptible de recevoir un containeur ou benne (6) également amovible, et il est muni d'un bras de levage et d'accrochage extensible et rétractable, ledit bras étant apte à charger et décharger le containeur (6) reçu sur la plate-forme (4) du véhicule tracteur, outre celui (7) de la remorque.

Les rampes avant (10) et arrière sont repliables entre une position opérationnelle dans laquelle est définit un plan incliné, et une position de roulage.

## Description

### DOMAINE DE L'INVENTION

L'invention se rattache au domaine de la collecte, idéalement sélective, des déchets et/ou de matériaux valorisables. Elle vise plus particulièrement un dispositif mobile permettant de collecter des déchets, puis de les transporter jusqu'à un centre de traitement ou de destruction.

### ETAT ANTERIEUR DE LA TECHNIQUE

Le principe des déchetteries mobiles, tout particulièrement destinées aux collectivités territoriales et locales, est connu.

On a ainsi décrit dans le document WO 97/25263 un tel dispositif mobile pour réaliser la collecte de matériaux valorisables et autres déchets, muni de containeurs, lesdits containeurs étant montés articulés par rapport à une remorque.

Dans cette configuration, afin de déposer les déchets de nature différente, il importe de garer son véhicule à proximité de la remorque, puis d'effectuer un certain nombre d'allers-retours avec les déchets de nature différente à déposer jusqu'aux différents containeurs. De sorte que lorsque la masse totale de déchets à déposer est importante, de telles manipulations peuvent se révéler longues et pénibles. En outre, l'ouverture des containeurs étant généralement orienté vers le haut, il est nécessaire de soulever à une certaine hauteur lesdits déchets afin de permettre leur dépôt dans les containeurs, accentuant la pénibilité.

On a également décrit dans le document EP 1 495 994, un dispositif du type en question, constitué d'une remorque pourvue de rampes au niveau de ses extrémités avant et arrière, et comportant des agencements s'étendant sur toute la longueur de ladite remorque, de telle sorte à permettre à un véhicule de monter sur ladite remorque et de se positionner en contre-haut par rapport à des containeurs disposés de part et d'autre de la remorque dans le sens de la longueur. En d'autres termes, ce dispositif mobile permet à un véhicule de monter sur une remorque par son extrémité avant ou arrière et de circuler sur la remorque dans le sens de la longueur, permettant ainsi de se positionner en contre-haut par rapport à des containeurs disposés sur le sol.

Incontestablement, ce dispositif constitue un perfectionnement important par rapport aux dispositifs existants, notamment en raison de la facilité pour l'utilisateur de permettre de décharger lesdits déchets dans des containeurs en fonction de la nature même desdits déchets.

Si ce dispositif a permis de significativement améliorer la manipulation de ces déchets, et donc corollairement leur traitement, en revanche, la manipulation des containeurs s'avère fastidieuse, et en outre limitée au volume et à la capacité de transport de ladite remorque.

L'objectif recherché par la présente invention vise à simplifier cette manipulation des containeurs et corollairement à augmenter la capacité de collecte de ces déchets.

### EXPOSE DE L'INVENTION

L'invention concerne ainsi un ensemble mobile pour réaliser la collecte de déchets, comprenant un véhicule tracteur et une remorque, ladite remorque étant pourvue de rampes au niveau de ses deux extrémités respectivement avant et arrière, et susceptible de recevoir sur sa plate-forme au moins un containeur ou benne amovible de réception desdits déchets.

Selon l'invention :
▪ le véhicule tracteur est lui-même pourvu d'une plate-forme susceptible de recevoir un containeur ou benne également amovible ;
▪ le véhicule tracteur est muni d'un bras de levage et d'accrochage extensible et rétractable, par exemple du type connu sous la marque déposée Ampliroll®, ledit bras étant apte à charger et décharger le containeur reçu sur la plate-forme dudit véhicule tracteur, outre celui de la remorque ;
▪ la rampe avant est repliable entre une position opérationnelle dans laquelle elle définit un plan incliné, et une position de roulage dans laquelle la rampe définit une paroi verticale formant butée pour le containeur qu'elle est destinée à recevoir;
▪ et la rampe arrière est repliable entre une position opérationnelle dans laquelle elle définit un plan incliné, et une position de roulage dans laquelle elle est positionnée à plat sur la plate-forme de ladite remorque.

En d'autres termes, l'invention permet d'ores et déjà de multiplier par deux le volume potentiel de collecte des déchets, en l'espèce constitué du containeur stockable sur la plate-forme du véhicule tracteur, et du containeur stockable sur la plate-forme de la remorque attelée audit tracteur. Par ailleurs, en raison de la manœuvrabilité accrue des containeurs ou bennes inhérente au bras de levage et d'accrochage présent sur ledit véhicule tracteur, on facilite les opérations de manutention desdits containeurs.

Avantageusement, la remorque est munie de ridelles latérales, articulées sur la plate-forme dont elle est munie, et déplaçables d'une position de roulage, alors verticales c'est-à-dire perpendiculaires au plan défini par ladite plate-forme, à une position de collecte des déchets.

Ces ridelles peuvent également, non pas être en position verticale lors du roulage, mais escamotées sous la plate-forme de la remorque, voire rabattues au-dessus de ladite plate-forme, afin de permettre le stockage sur ladite plate-forme d'un containeur ou d'une benne de plus grande largeur.

Le déplacement relatif des ridelles par rapport à la plate-forme est avantageusement réalisé à l'aide de vérins pneumatiques, hydrauliques ou électriques.

Selon une autre caractéristique avantageuse de l'invention, les rampes de la remorque sont déplaçables de leur position de roulage à leur position opérationnelle, et vice-versa, au moyen de vérins, là encore, pneumatiques, hydrauliques ou électriques.

Idéalement, les rampes sont chacune constituées de deux parties planes, articulées l'une à l'autre et déplaçables l'une par rapport à l'autre au moyen de vérins.

Selon une autre caractéristique avantageuse de l'invention, la remorque est munie d'une suspension pneumatique, dont la hauteur est ajustable entre une position supérieure de roulage et une position inférieure de collecte, dans le but d'abaisser le plancher de la remorque réceptionnant les véhicules.

### DESCRIPTION DES FIGURES

La manière dont l'invention peut être réalisée et les avantages qui en découlent ressortiront mieux des exemples de réalisation qui suivent, donnés à titre indicatif et non limitatif, à l'appui des figures annexées.
La figure 1 est une représentation schématique en vue latérale de l'ensemble mobile de l'invention.
Les figures 2, 3 et 4 représentent différentes étapes de chargement du containeur sur la remorque à l'aide du bras dont est muni le véhicule tracteur.
La figure 5 est une représentation schématique en perspective de la remorque en mode de circulation sur la voie publique, c'est-à-dire en position non-opérationnelle.
La figure 6 est une vue latérale de la remorque de la figure 5.
La figure 7 est une représentation schématique en perspective de ladite remorque avec les ridelles latérales déployées.
Les figures 8 à 13 représentent les différentes étapes de déploiement de la rampe arrière de la remorque.
La figure 14 est une représentation schématique de la remorque en mode opérationnel, c'est-à-dire les deux rampes respectivement avant et arrière déployées et les ridelles latérales abaissées.
Les figures 15 et 16 sont des représentations schématiques illustrant l'un des containeurs positionné de manière adjacente à la remorque avec ses rampes déployées, donc en position opérationnelle.
La figure 17 est une représentation schématique en perspective illustrant deux containeurs de part et d'autre de la remorque en position opérationnelle avec ses rampes déployées.

### DESCRIPTION DETAILLEE DE L'INVENTION

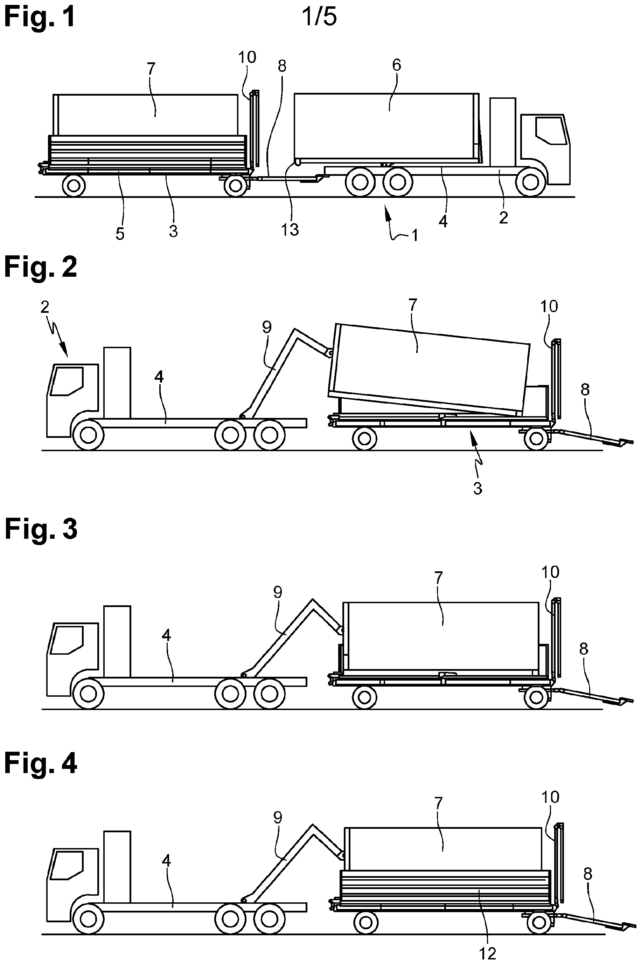

On a donc schématiquement illustré, en relation avec la figure 1, l'ensemble mobile (1) destiné à réaliser la collecte de déchets. Un tel ensemble mobile est typiquement constitué d'un véhicule tracteur (2), en l'espèce un camion, lui-même comprenant une plate-forme (4), auquel est attelée une remorque (3), munie à cet effet d'un moyen d'attelage (8).

Comme on peut l'observer sur la figure 1, la plate-forme (4) du véhicule tracteur (2) et la plate-forme (5) de la remorque (3) portent chacune un containeur (6, 7), par exemple de dimensions standards, typiquement une benne de dimensions de 6,60 mètres en longueur sur 2,10 mètres en largeur. Alternativement, la benne reçue sur la remorque peut être de largeur inférieure, dans la configuration décrite ci-après, où les ridelles latérales dont elle est munie sont positionnées verticalement lors du roulage.

Ledit véhicule tracteur (2) est en l'espèce muni, comme on peut bien le voir notamment sur les figures 2, 3 et 4, d'un bras de levage et d'accrochage (9), bien connu sous la marque déposée Ampliroll®, et par exemple décrit dans le document FR 2 257 460. Typiquement, ce bras en équerre est articulé sur la plate-forme (4) du véhicule tracteur (2), et dont son extrémité libre est munie d'un crochet (non représenté) destiné à venir se crocheter sur un axe ou anse fixe (14) ménagé au niveau de la face avant du containeur. Ledit conteneur est chargé ou déchargé par pivotement par rapport à la plate-forme, respectivement du véhicule tracteur ou de la remorque, et est en outre muni de galets (13) au niveau de l'extrémité opposée à la face avant du containeur munie de l'anse fixe (14), et ménagés sur sa face inférieure, favorisant son roulement sur la plate-forme ou sur le sol le cas échéant. Ledit bras d'accrochage (9) est mû par des vérins, traditionnellement hydrauliques (non représentés).

La figure 2 illustre le positionnement du containeur (7) de la remorque, par hypothèse après avoir été rempli au niveau de sa plate-forme. On observe le basculement relatif dudit containeur par rapport à la plate-forme, le véhicule tracteur (2) étant accolé à l'arrière de ladite remorque, afin de permettre l'actionnement et le crochetage du bras d'accrochage (9).

La figure 3 illustre la poussée du containeur contre la face avant de la remorque, face avant qui, comme décrit ultérieurement, est constitué par la rampe antérieure (10) dont est munie ladite remorque en position repliée.

La figure 4 illustre le positionnement définitif dudit containeur (7) au sein de la remorque, après basculement des ridelles latérales (12) en position verticale, permettant alors à ladite remorque son déplacement sur la voie publique.

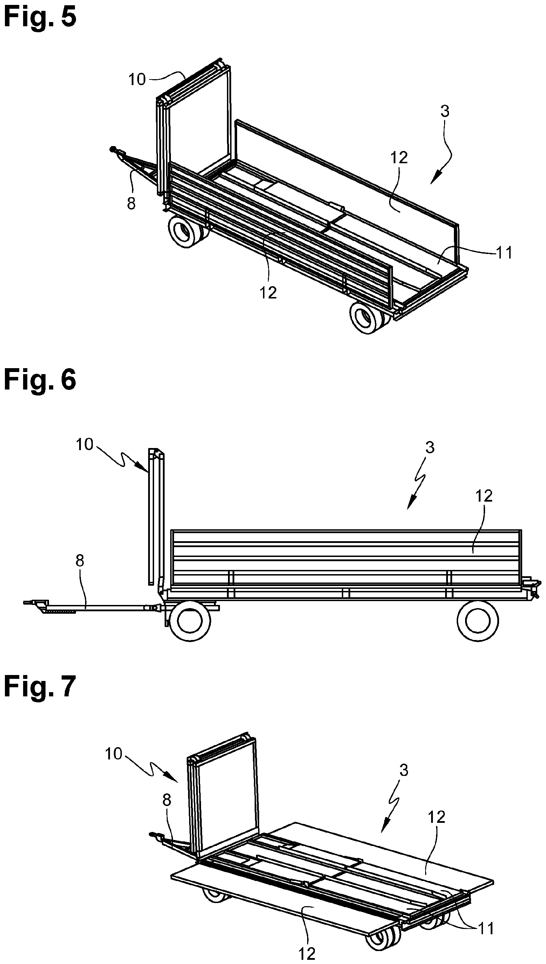

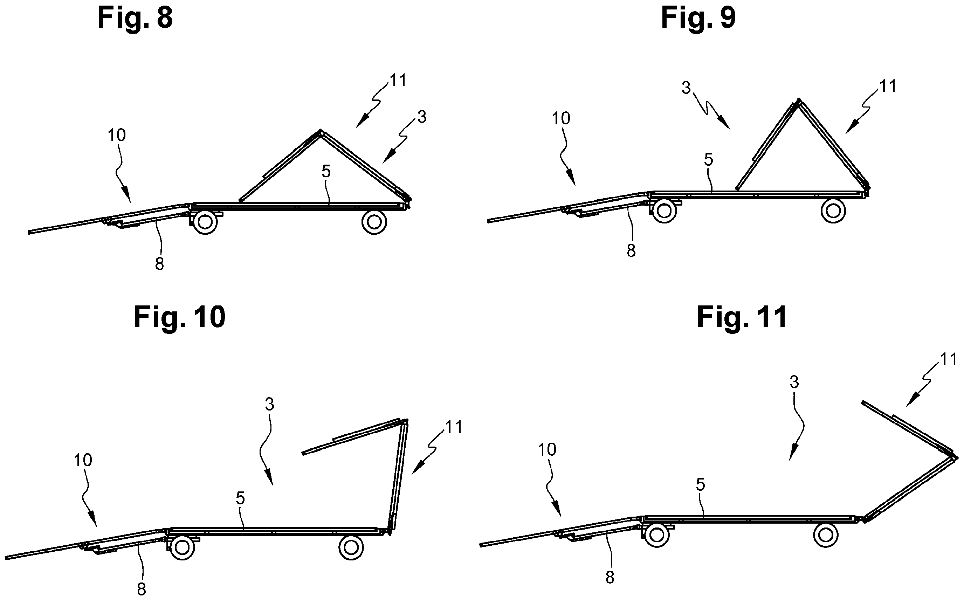

Si, selon l'invention, le véhicule tracteur (2) de l'ensemble mobile (1) de l'invention n'a pas de caractéristique particulière hormis le fait qu'il est muni d'un tel bras de levage et d'accrochage (9), la remorque (3) quant à elle, est décrite plus en détail en relation avec les figures 5 à 14, présente les caractéristiques suivantes.

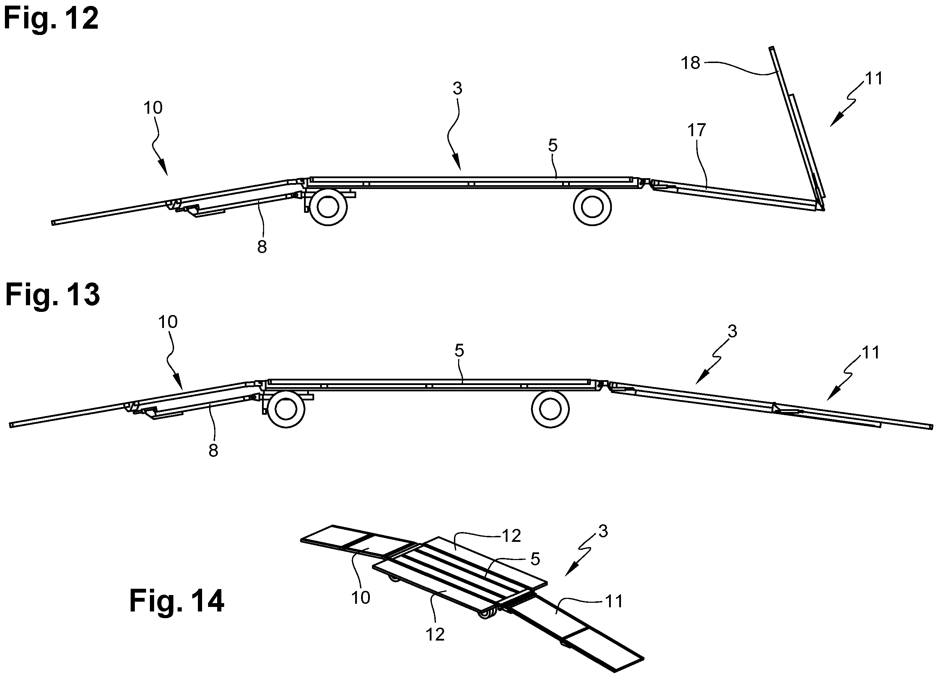

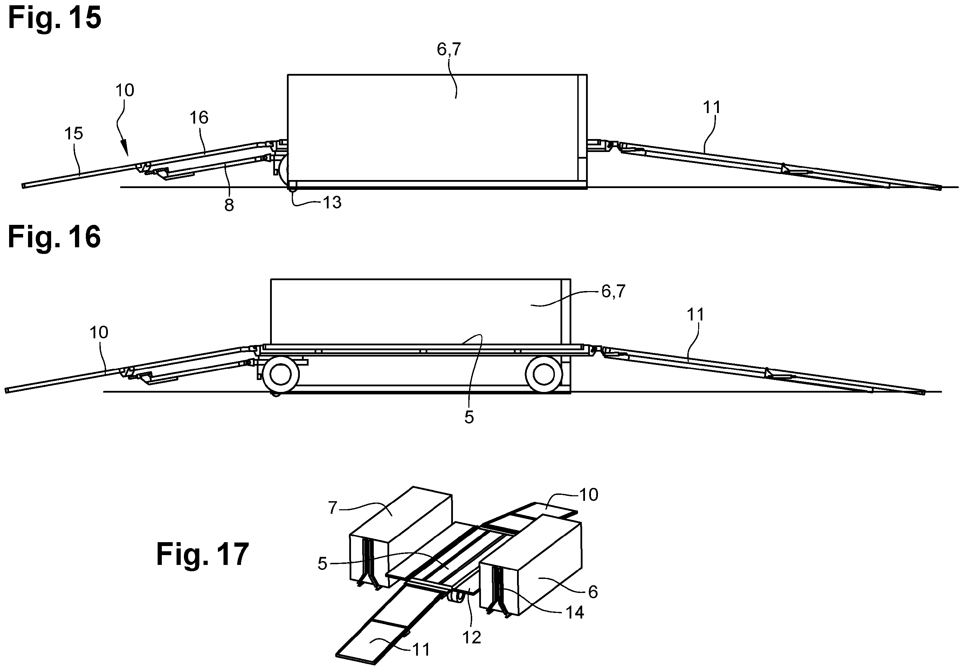

Celle-ci en effet présente, outre son crochet d'attelage antérieur (8) sur le véhicule tracteur (2), deux rampes respectivement antérieure (10) et postérieure (11), susceptibles de présenter deux configurations :
- une configuration en mode opérationnel, dans laquelle lesdites rampes sont aptes à définir, ainsi qu'on peut l'observer sur les figures 14 et 17, deux pans inclinés, respectivement antérieur et postérieur, en continuité avec la plate-forme (5) proprement dite, destinés à permettre la montée puis la descente de véhicules automobiles sur ladite plate-forme ;
- et une configuration en mode déplacement sur la voie publique, selon laquelle lesdites rampes sont soit repliée (rampe antérieure), soit positionnée à plat sur la plate-forme (5).

En l'espèce, ces rampes avant et arrière sont chacune constituées de deux éléments plans, respectivement (15, 16) et (17, 18), articulés l'un à l'autre pour ainsi permettre le repli de l'un sur l'autre, et corollairement l'érection d'un pan incliné en continuité avec la plate-forme (5), l'un des plans de chacune des deux rampes étant lui-même articulé respectivement à l'extrémité avant et arrière de ladite plate-forme.

Les déplacements relatifs des plans inclinés l'un par rapport à l'autre, ou des rampes par rapport à la plate-forme sont typiquement réalisés au moyen de vérins (non représentés).

S'agissant plus spécifiquement de la rampe antérieure ou avant (10), elle est positionnée en mode circulation en position verticale, comme on peut bien l'observer sur les figures 1, 5 et 6. Ce faisant, elle sert de butée pour la réception du containeur (7), lorsque celui-ci est mis en place sur la remorque à l'aide du bras d'accrochage (9) du véhicule tracteur, tel qu'illustré sur les figures 2 à 4. Avantageusement, le containeur (7) positionné sur la remorque présente au niveau de sa face postérieure, c'est-à-dire la face opposée à celle au niveau de laquelle le bras muni du crochet est susceptible de se solidariser, des butées en caoutchouc (non représentées) afin de minimiser l'impact du choc sur la rampe antérieure (10).

S'agissant de la rampe postérieure ou arrière (11), son stockage en mode circulation s'effectue en position dépliée, reposant de fait à plat sur la plate-forme (5) elle-même, ainsi qu'on peut bien l'observer sur les figures 5 et 7. Le conteneur (7) est alors positionné, toujours en mode circulation, sur ladite rampe (11), ainsi qu'on peut l'observer sur les figures 2 et 3.

Selon une autre caractéristique de l'invention, la remorque (3) est pourvue de ridelles latérales (12), articulées sur les bords latéraux de la plate-forme (5). Selon une première forme de réalisation, ces ridelles sont positionnées verticalement, lorsque ladite remorque, et donc l'ensemble mobile de l'invention est destiné à se déplacer sur la voie publique (voir figures 5 et 6). Lesdites ridelles sont destinées à être déployées, en l'espèce de manière horizontale selon un plan horizontal prolongeant le plan défini par ladite plate-forme, tel qu'on peut l'observer sur les figures 7 et 17, en position opérationnelle c'est-à-dire lorsque ladite remorque est en position de déchetterie, afin de faciliter les manœuvres de décharge par l'utilisateur dans les containeurs disposés de part et d'autre de ladite remorque (figure 17).

Selon une autre configuration, les ridelles (12), toujours articulées sur les bords latéraux de la plate-forme (5), sont susceptibles d'être escamotés sous ladite plate-forme (5) en mode roulage, voire rabattues au-dessus de celle-ci, afin d'optimiser les dimensions de stockage de la remorque, et donc typiquement, de pouvoir stocker sur cette dernière un containeur ou une benne (7) de plus grande dimension, notamment en termes de largeur.

Selon une caractéristique avantageuse de l'invention, la suspension de la remorque est susceptible de présenter deux modes opérationnels, respectivement mode de déplacement sur la voie publique en position haute, et mode opérationnel, c'est-à-dire en mode déchetterie, donc abaissée, ce dans l'objectif de favoriser les opérations de manutention et notamment des utilisateurs.

Le déplacement relatif des suspensions en mode route et en mode opérationnel est réalisé à l'aide de vérins, actionnables par le chauffeur par tout moyen.

En mode complètement opérationnel, c'est-à-dire en utilisation déchetterie, tel qu'on peut l'observer sur la figure 17, la remorque dispose de part et d'autre de sa dimension principale de deux containeurs (6, 7), à l'origine respectivement stockés sur la plate-forme (3) du véhicule tracteur (2) et sur la plate-forme (5) de la remorque elle-même. On dispose ainsi d'une capacité de collecte de déchets importante, lesdits containeurs étant susceptibles en outre de présenter des parois internes définissant des compartiments en vue de favoriser le tri sélectif.

Typiquement, lorsque l'ensemble mobile arrive au lieu de positionnement de la déchetterie mobile, le chauffeur dételle la remorque. Puis à l'aide du bras (9), il dépose le containeur (6) stocké sur sa propre plate-forme (3) le long de la remorque. Enfin, il dépose le containeur (7) stocké sur ladite remorque, également le long de la remorque du côté opposé au lieu d'entreposage du conteneur (6), comme illustré sur la figure 17. Afin de manipuler le containeur (7) stocké sur la remorque, le chauffeur vient accoler en marche arrière le véhicule tracteur contre l'arrière de la remorque, tel qu'on peut l'observer sur les figures 2 à 4. Il peut alors déployer le bras d'accrochage (9) et le crocheter sur l'anse (14) dont le containeur est pourvu.

En d'autres termes, en raison de l'escamotage totale de la rampe arrière (11), sur la plate-forme (3), et sous le containeur (7) en mode de circulation, on libère totalement l'accès à ladite remorque par l'arrière de cette dernière, et corollairement, il devient possible de stocker sur la remorque des containeurs du type benne visés précédemment, ce qui n'était pas possible avec les ensembles mobiles de l'art antérieur. On facilite ce faisant les opérations de manipulations desdits containeurs, et on économise un temps de manipulation non négligeable.

Une fois les conteneurs pleins, le chauffeur procède dans l'ordre inverse pour manipuler lesdits containeurs, et notamment les recharger, respectivement sur la remorque (3) et sur le véhicule tracteur (2).

On conçoit tout l'intérêt de l'ensemble mobile de l'invention qui permet, comme déjà précisé, d'optimiser la capacité de collecte de déchets, tout en favorisant et en facilitant la manipulation des déchets par les utilisateurs.

## Revendications

1. Ensemble mobile (1) pour réaliser la collecte de déchets, comprenant un véhicule tracteur (2) et une remorque (3) attelée sur ce dernier, ladite remorque (3) étant pourvue de rampes (10, 11) au niveau de ses deux extrémités respectivement avant et arrière, et susceptible de recevoir sur sa plate-forme (5) au moins un containeur ou benne amovible (7) de réception desdits déchets, ***caractérisé** :*
▪ en ce que le véhicule tracteur (2) est lui-même pourvu d'une plate-forme (4) susceptible de recevoir un containeur ou benne (6) également amovible ;
▪ en ce que le véhicule tracteur (2) est muni d'un bras de levage et d'accrochage (9) extensible et rétractable, ledit bras étant apte à charger et décharger le containeur (6) reçu sur la plate-forme (4) du véhicule tracteur, outre celui (7) de la remorque ;
▪ en ce que la rampe avant (10) est repliable entre une position opérationnelle dans laquelle est définit un plan incliné, et une position de roulage dans laquelle la rampe définit une paroi verticale formant butée pour le containeur (6) qu'elle est destinée à recevoir ;
▪ et en ce que la rampe arrière (11) est repliable entre une position opérationnelle dans laquelle elle définit un plan incliné, et une position de roulage dans laquelle elle est positionnée à plat sur la plate-forme (5) de ladite remorque.

2. Ensemble mobile (1) pour réaliser la collecte de déchets selon la revendication 1, ***caractérisé* en ce que** la remorque (3) est munie de ridelles latérales (12), articulées sur la plate-forme (5) dont elle est munie, et déplaçables d'une position de roulage, alors verticales c'est-à-dire perpendiculaires par rapport au plan défini par ladite plate-forme, à une position de collecte des déchets, avantageusement selon un plan horizontal prolongeant le plan défini par ladite plate-forme.

3. Ensemble mobile (1) pour réaliser la collecte de déchets selon la revendication 1, ***caractérisé* en ce que** la remorque (3) est munie de ridelles latérales (12), articulées sur la plate-forme (5) dont elle est munie, et déplaçables d'une position de roulage, alors positionnées sous ou rabattues au-dessus de ladite plate-forme (5), à une position de collecte des déchets, avantageusement selon un plan horizontal prolongeant le plan défini par ladite plate-forme.

4. Ensemble mobile (1) pour réaliser la collecte de déchets selon l'une des revendications 2 et 3, ***caractérisé* en ce que** le déplacement relatif des ridelles (12) par rapport à la plate-forme (5) est réalisé à l'aide de vérins pneumatiques, hydrauliques ou électriques.

5. Ensemble mobile (1) pour réaliser la collecte de déchets selon l'une des revendications 1 à 4, ***caractérisé* en ce que** les rampes (10, 11) de la remorque (3) sont déplaçables de leur position de roulage à leur position opérationnelle, et vice-versa, au moyen de vérins pneumatiques, hydrauliques ou électriques.

6. Ensemble mobile (1) pour réaliser la collecte de déchets selon l'une des revendications 1 à 5, ***caractérisé* en ce que** les rampes (10, 11) de la remorque (3) sont chacune constituées de deux parties planes (15, 16 ; 17, 18), articulées l'une à l'autre et déplaçables l'une par rapport à l'autre au moyen de vérins.

7. Ensemble mobile (1) pour réaliser la collecte de déchets selon l'une des revendications 1 à 6, ***caractérisé* en ce que** la remorque (3) est munie d'une suspension pneumatique, dont la hauteur est ajustable entre une position supérieure de roulage et une position inférieure de collecte, dans le but d'abaisser le plancher de la remorque réceptionnant les véhicules.
